# EUROPÄISCHE PATENTSCHRIFT

(11) **EP 2 878 528 B1**
(45) Veröffentlichungstag und Bekanntmachung des Hinweises auf die Patenterteilung: **22.05.2019**
(21) Anmeldenummer: 14450050.1
(22) Anmeldetag: 27.11.2014
(51) Int. Cl.: B62D 15/02, B63H 25/52, B63B 49/00, G05D 1/02, G01C 21/20, B63H 25/42

(54) **Verfahren zum motorenbetriebenen Anlegen**
Method for motor-powered application
Procédé destiné à l'application motorisée

(30) Priorität: 27.11.2013 AT 9062013
(43) Veröffentlichungstag der Anmeldung: 03.06.2015
(73) Patentinhaber: Kuhn, Andreas, 5431 Kuchl (AT); Kuhn, Birgit, 5431 Kuchl (AT)
(72) Erfinder: Kuhn, Andreas, 5431 Kuchl (AT); Kuhn, Birgit, 5431 Kuchl (AT)
(74) Vertreter: Gibler & Poth Patentanwälte KG

(56) Entgegenhaltungen:
- EP-A2- 0 154 018
- DE-A1-102009 046 676
- DE-A1-102012 201 870
- DE-A1-102012 203 235
- US-A1- 2003 137 445
- US-A1- 2010 168 942
- US-A1- 2012 129 410

## Beschreibung

Die Erfindung betrifft ein Verfahren zum motorenbetriebenen Anlegen mit einem Schiff gemäß dem Patentanspruch 1.

Die mitunter schwierigste Aufgabe beim Betreiben von Schiffen, insbesondere Jachten, ist das Anlegen im Hafen. Grund dafür ist, dass das Schiff eine relativ lange Latenzzeit zwischen Ausführen des Steuerkommandos und der tatsächlichen Reaktion des Schiffes hat. Dazu kommen die Unsicherheiten durch Strömungen und Winde. Gute Bootsführer benötigen für die Steuerung ihres Schiffes demnach eine gute Prognosefähigkeit und Erfahrung, wie sich das Schiff in bestimmten Situationen verhalten wird, um es passend zu steuern. Dazu kommt, dass relativ viele Aktoren gleichzeitig mit teilweise redundanten und überlagerten Wirkungen anzusteuern sind. So ist das Anlegen und das Rangieren im Hafen eine sehr komplexe und zeitraubende Aufgabe für den Bootsführer.

Aus der US 2012/0129410 A1 ist ein automatisiertes Andocksystem bekannt. Durch das Andocksystem kann dann eine gewünschte Distanz zum Dock angegeben werden, welche das Andocksystem versucht zu erreichen. Hierbei wird über Abstandsensoren der Abstand von Bug und Heck zu dem Dock überwacht und das Schiff durch Betätigung diverser Strahlruder in die gewünschte Position gebracht.

Aus der US 2003/0137445 A1 ist ebenfalls ein Andocksystem bekannt, welches lediglich für die Steuerung einer Seitwärtsbewegung in Richtung eines Docks ausgebildet ist.

Aus der US 2010/0168942 A1 ist ein System zur Optimierung eines Weges eines Schiffes in einem Wasserweg von einer Anfangsposition zu einer Endposition bekannt. Anhand der Bestimmung der eigenen Position kann ein Abkommen von dem optimalen Weg erkannt und gegengesteuert werden.

Aus der DE 10 2012 203 235 A1 ist ein Verfahren zum automatischen Durchführen einer Einparkbewegung eines Landfahrzeuges bekannt. Hierbei wird eine Parklücke bei einem Vorbeifahren erfasst und eine Trajektorie zum Einparken berechnet. Beim Einparken wird weiters die Umgebung überwacht, wobei bei einer Feststellung eines Hindernisses das Fahrzeug angehalten wird, und das Einparkmanöver erst nach einer Freigabe durch den Benützer fortgesetzt wird.

Aus der DE 10 2009 046 676 A1 ist ein Fahrerassistenzsystem bekannt, bei welchem Trajektorien berechnet und dem Fahrer auf einem Display angezeigt werden. Der Fahrer kann dann den Trajektorien folgen.

Aus der DE 10 2012 201 870 A1 ist ein Verfahren zur automatischen Auslösen einer Selbstlokalisierung bei einem Staubsaugerroboter bekannt.

Aus der EP 0 154 018 A2 ist ein Verfahren zur Erleichterung der Navigation eines Schiffes bekannt.

Aufgabe der Erfindung ist es daher ein Verfahren der eingangs genannten Art anzugeben, mit welchem die genannten Nachteile vermieden werden können, und mit welchem das Anlegen des Schiffes einfach, schnell und zuverlässig erfolgen kann.

Erfindungsgemäß wird dies durch die Merkmale des Patentanspruches 1 erreicht.

Dadurch ergibt sich der Vorteil, dass dadurch das Anlegen wesentlich vereinfacht wird, und dass das Schiff hierbei autonom und ohne Einwirkung des Bootsführers selbst bei beengten Verhältnissen wie in einem Hafenanlage zuverlässig und schnell zu der geeigneten Anlegestelle steuern kann. Hierbei kann das Schiff selbst bei einer großen Hafenanlage oder einer Hafenanlage mit sehr begrenzten Raum vorausschauend einen Weg bestimmen, welcher das Schiff zu der Anlegestelle führt, und das Schiff weiters zuverlässig und sicher zu dieser Anlegestelle steuern.

Die Erfindung betrifft weiters ein Schiff gemäß dem Oberbegriff des Patentanspruches 11.

Aufgabe der Erfindung ist es daher weiters ein Schiff anzugeben, mit welchem die genannten Nachteile vermieden werden können, und welches einfach, schnell und zuverlässig anlegen kann.

Erfindungsgemäß wird dies durch die Merkmale des Patentanspruches 11 erreicht.

Die Vorteile des Schiffes entsprechen den Vorteilen des Verfahrens.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme In die Beschreibung eingefügt sind und als wörtlich wiedergegeben gelten.

Die Erfindung wird unter Bezugnahme auf die beigeschLossenen Zeichnungen, in welchen lediglich bevorzugte Ausführungsformen beispielhaft dargestellt sind, näher beschrieben. Dabei zeigt:
Fig. 1 eine erste schematische Darstellung einer bevorzugten Ausführungsform des Schiffes;
Fig. 2 eine zweite schematische Darstellung einer bevorzugten Ausführungsform des Schiffes; und
Fig. 3 eine Schematische Darstellung einer bevorzugten Ausführungsform des Verfahrens.

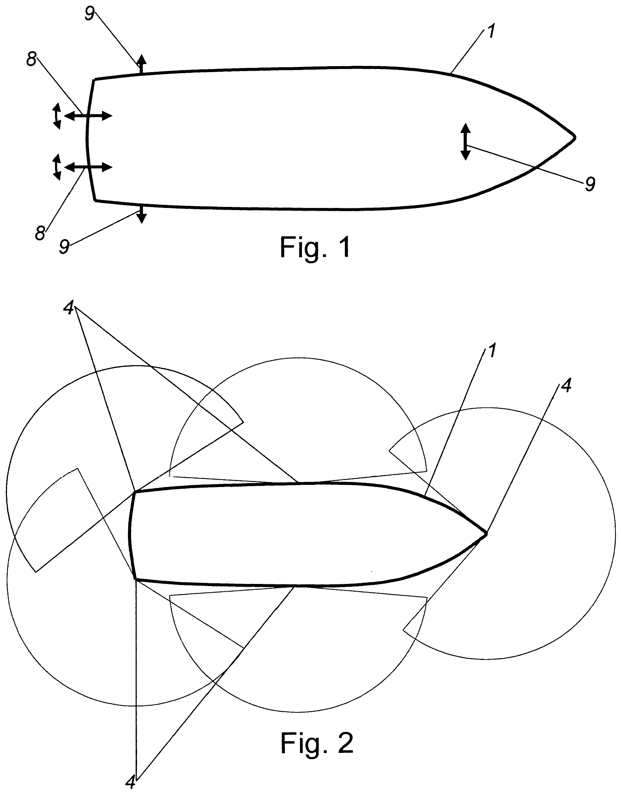

Die Fig. 1 bis 3 zeigen schematische Darstellungen für ein Verfahren zum motorenbetriebenen Anlegen mit einem Schiff 1, insbesondere einer Jacht, an einer Anlegestelle 2 in einem Anlegebereich, wobei in einem Kartenerstellungsschritt eine Ist-Karte einer Umgebung des Anlegebereiches erstellt wird, wobei in einem Anlegepositionbestimmungsschritt die Anlegestelle 2 und eine Anlegeposition des Schiffes 1 in der Anlegestelle 2 in dem Anlagebereich bestimmt wird, wobei in einem Trajektorienplanungsschritt eine Soll-Trajektorie 3 von einer Ist-Position des Schiffes 1 zu der Anlegeposition des Schiffes 1 bestimmt wird, wobei in einem Trajektorienverfolgungsschritt das Schiff 1 entlang der Soll-Trajektorie 3 in Richtung der Anlegeposition gesteuert wird.

Dadurch ergibt sich der Vorteil, dass dadurch das Anlegen wesentlich vereinfacht wird, und dass das Schiff 1 hierbei autonom und ohne Einwirkung des Bootsführers, also der Person welche das Schiff 1 betreibt, selbst bei beengten Verhältnissen wie in einer Hafenanlage 5 zuverlässig und schnell zu der geeigneten Anlegestelle 2 steuern kann. Hierbei kann das Schiff 1 selbst bei einer großen Hafenanlage 5 oder einer Hafenanlage 5 mit sehr begrenzten Raum vorausschauend einen Weg, nämlich die Soll-Trajektorie 3, bestimmen, welcher das Schiff 1 zu der Anlegestelle 2 führt, und das Schiff 1 zuverlässig und sicher zu dieser Anlegestelle 2 steuern.

Weiters ist ein Schiff 1, insbesondere eine Jacht, umfassend eine Steuervorrichtung zum Bewegen des Schiffes 1 vorgesehen, wobei das Schiff 1 Umfeldsensoren 4 und eine mit den Umfeldsensoren 4 verbundene Regeleinheit umfasst, wobei die Regeleinheit mit der Steuervorrichtung verbunden ist um das Schiff 1 vorgebbar zu bewegen, wobei die Regeleinheit ausgebildet ist die Ist-:Karte der Umgebung des Anlegebereiches zu erstellen, eine Anlegestelle 2 und die Anlegeposition des Schiffes 1 in der Anlegestelle 2 auszuwählen, die Soll-Trajektorie 3 von einer Ist-Position des Schiffes 1 zu der Anlegeposition des Schiffes 1 zu bestimmen, und das Schiff 1 durch Betätigung der Steuervorrichtung bei Überwachung eines Umfeldes des Schiffes 1 durch die Umfeldsensoren 4entlang der Soll-Trajektorie 3 in Richtung der Anlegeposition zu steuern.

Das Schiff 1 ist ein Wasserfahrzeug, welches über wenigstens einen Antrieb mit einem Motor verfügt. Das Schiff 1 kann insbesondere ein Motorboot, eine Jacht, insbesondere eine Motorjacht sein. Das Schiff 1 kann weiters eine Segeljacht sein, welche über einen motorisierten Hilfsantrieb verfügt.

Anlegen bezeichnet ein Manöver eines Schiffes1, bei welchen das Schiff 1 zu einer Anlegestelle 2 geführt wird, an welcher das Schiff 1 in weiterer Folge vertaut werden kann und die Besatzung das Schiff verlassen oder betreten kann. Der Anlegebereich ist hierbei jener grober Bereich, welcher von dem Bootsführer zum Anlegen vorgesehen wird, beispielsweise eine Hafenanlage 5, ein Naturhafen oder eine Bucht. Die Anlegestelle 2 ist jene konkrete Stelle, an welcher das Schiff 1 anlegen soll, insbesondere ein freier Stellplatz in einer Hafenanlage 5.

Der Antrieb kann von der Steuervorrichtung des Schiffes 1 gesteuert werden. Die Steuervorrichtung des Schiffes 1 kann weiters ein Ruder des Schiffes 1 steuern.

Das Schiff 1 kann insbesondere mehrere Hauptantriebe 8 aufweisen, welche vorzugsweise auch unabhängig voneinander in Längsrichtung gesteuert werden können. Weiters können die Hauptantriebe 8 drehbar angeordnet sein.

Weiters kann das Schiff 1 wenigstens ein Querstrahlruder 9 aufweisen, wobei das Querstrahlruder 9 in einem Bugbereich und/oder in einem Heckbereich des Schiffes 1 angeordnet sein kann. Die Steuermöglichkeiten bezüglich des Schiffes 1 sind durch die Pfeile in Fig. 1 angedeutet.

Das Schiff 1 weist Umfeldsensoren 4 auf, welche die Umgebung des Schiffes 1 erfassen. Hierbei kann insbesondere vorgesehen sein, dass die Umfeldsensoren 4 einen Bereich von 0 m bis 100 m um das Schiff 1 erfassen. Die Umfeldsensoren 4 können insbesondere eine um das Schiff 1 herum angeordnetes Umgebung erfassen, wie die in Fig. 2 angedeutet ist.

Die Umfeldsensoren 4 können insbesondere Short Range Radar, LIDAR, LaserScanner, PMD-Sensören, Video mit Bilderkennung und Interpretation und/oder Stereo-Video umfassen. Die verschiedenen Sensortypen können insbesondre kombiniert eingesetzt werden, sodass sich ein umfassendes Bild von der unmittelbaren Umgebung des Bootes ergibt und die Schwächen einzelner Sensorsysteme kompensiert werden können.

Die Umfeldsensoren 4 können insbesondere Sensoren mit einem flächigen Erfassungsbereich umfassen, durch welche ein 3D-Bild der Umgebung erstellt werden kann.

Die Regeleinheit kann insbesondere ein Kartenerstellungsmodul umfassen, welches Kartenerstellungsmodul ausgebildet ist den Kartenerstellungsschritt auszuführen. Das Kartenerstellungsmodul kann insbesondere mit den Umfeldsensoren 4 verbunden sein.

Die Regeleinheit, und hierbei insbesondere das Kartenerstellungsmodul, kann besonders bevorzugt einem SLAM-Algorithmus aufweisen. Unter SLAM versteht man eine simultane Lokalisierung und Kartenerstellung; wobei unter Zuhilfenahme der Umfeldsensoren 4 eine Karte der Umgebung erstellt, und die eigene Position in dieser Karte ermittelt wird. Dadurch kann eine Erstellung der Ist-Karte auch für Anlegestellen mit vielen unbekannten Objekten, seien diese fest oder beweglich erstellt werden.

Die Regeleinheit kann insbesondere ein Trajektorienplanungsmodul umfassen, welches Trajektorienplanungsmodul ausgebildet ist den Trajektorienplanungsschritt auszuführen.

Die Regeleinheit kann insbesondere ein Regelungsmodul umfassen, welches Regelungsmodul ausgebildet ist den Trajektorienverfolgungsschritt auszuführen. Das Regelungsmodul kann insbesondere mit der Steuereinheit und den Umfeldsensoren 4 verbunden sein.

Das Kartenerstellungsmodul, das Trajektorienplanungsmodul und das Regelungsmodul können insbesondere als Softwaremodule ausgebildet sein, welche über Schnittstellen miteinander gekoppelt sind.

Weiters kann bevorzugt vorgesehen sein, dass die Regeleinheit, insbesondere das Regelmodul, ein Machine-Learning-Modell, ein datengetriebenes Modell und/oder ein beispielbasiertes Modell umfasst. Hierbei hat es sich als vorteilhaft erwiesen die Regelstreckenmodelle mit beispiel- bzw. datenbasierten Modellen zu trainieren, welche dann für eine modelbasierte, prädiktive Regelung verwendet werden. Dies ist bei einem Wasserfahrzeug wie das Schiff 1 im Vergleich zu einem Landfahrzeug besonders vorteilhaft, da das Schiff 1 eine Vielzahl an Aktoren aufweist, und ein Manöver wie eine Kehrtwende auf engem Raum durch eine Vielzahl an Möglichen Kombinationen des Zusammenwirkens der einzelnen Aktoren erreicht werden kann, wobei die Wirkung der einzelnen Steuerbefehle in der Regel verzögert eintritt. Weiters können die einzelnen Schiffstypen sehr unterschiedliche Verhalten auf die einzelnen Steuerbefehle aufweisen. Dadurch kann die Regeleinheit auf einer Vielzahl an unterschiedlichen Schiffstypen eingesetzt werden, und an die Besonderheiten des jeweiligen Schiffes angelernt werden.

Bei dem Kartenerstellungsschritt wird eine Ist-Karte der Umgebung des Anlegebereiches erstellt. Die Ist-Karte ist hierbei eine, insbesondere digitale, Karte der Umgebung des vorgegebenen Anlegebereiches für den Zeitpunkt, zu welcher die Ist-Karte erstellt wurde. Die Ist-Karte kann hierbei insbesondere ein Gebiet mit einem Durchmesser von 300 m bis 3.000 m umfassen.

Bevorzugt kann vorgesehen sein, dass die Ist-Karte Daten einer nautischen Karte des Anlegebereiches umfasst. Eine derartige Karte kann beispielsweise eine Karte einer bekannten Hafenanlage 5 sein, welche der Regeleinheit digital vorgespeichert zur Verfügung steht.

Insbesondere kann vorgesehen sein, dass für den Kartenerstellungsschritt Sensordaten von Umfeldsensoren 4 des Schiffes 1 für die Erstellung der Ist-Karte verwendet werden. Hierbei können von den Umfeldsensoren 4 erfasst Objekte der Ist-Karte zugefügt werden, wodurch die Ist-Karte eine genaue Abbildung der direkten Umgebung des Schiffes 1 umfasst.

Der Kartenerstellungsschritt und die Positionsbestimmung des Schiffes 1 in der Ist-Karte kann insbesondere mittels eines SLAM-Algorithmus erfolgen.

Besonders bevorzugt kann vorgesehen sein, dass der Anlegebereich eine Hafenanlage 5 ist, und dass für den Kartenerstellungsschritt von einer Leitstelle für die Hafenanlage 5 gesendete erste Daten für die Erstellung der Ist-Karte verwendet werden. Die Leitstelle für die Hafenanlage 5 kann insbesondere eine Hafenmeisterei sein. Die ersten Daten können insbesondere über Funk, besonders bevorzugt als digitale Daten, dem Schiff 1 übermittelt werden. Das Schiff 1 kann hierfür insbesondere eine Kommunikationseinheit zur digitalen Datenübermittlung aufweisen, welche mit der Regeleinheit verbunden ist.

Bevorzugt kann vorgesehen sein, dass die ersten Daten Koordinatenpunkte von festen Bauten 6 der Hafenanlage 5 umfassen. Derartige feste Bauten können insbesondere Stege, Kaimauern, Wellenbrecher und andere immobilen Objekte der Hafenlage 5 sein. Dadurch kann die Regeleinheit auch bei einer unbekannten Hafenanlage 5 zuverlässig navigieren.

Die ersten Daten können weiters Informationen über Bereiche umfassen, welche für das Schiff 1 gesperrt sind. Derartige Bereiche können insbesondere Untiefen, Badebereiche oder für diesen Schiffstyp nicht zugelassene Bereiche der Hafenanlage sein.

Besonders bevorzugt kann vorgesehen sein, dass die ersten Daten einen Belegungsplan der Hafenanlage 5 mit anderen Schiffen 7 umfassen. Der Belegungsplan der Hafenanlage 5 kann hierbei angeben, an welchen Koordinaten die anderen angelegten Schiffe 7 in der Hafenanlage angeordnet sind, welche in der Regel einen großen Raum in der Hafenanlage 5 einnehmen. Hierbei können die ersten Daten weiters Informationen bezüglich der Ausmaße oder des Schiffstypus der anderen Schiffe 7 umfassen. Dadurch kann die Ist-Karte bereits eine sehr umfassende Informationsmenge bezüglich des zur Verfügung stehenden Raumes in der Hafenanlage 5 aufweisen.

Die ersten Daten können weiters Informationen über andere bewegliche Objekte in der Hafenanlage 5 umfassen. Diese anderen beweglichen Objekte können beispielsweise andere Schiffe 7 sein, welche sich in der Hafenanlage 5 bewegen.

Die ersten Daten können weiters Informationen über Strömungen 10 in der Hafenanlage 5 umfassen. Hierbei können insbesondere die ersten Daten Informationen bezüglich Ort, Richtung und Stärke von Strömungen 10 in der Hafenanlage 5 umfassen.

In dem Anlegepositionbestimmungsschritt wird die Anlegestelle 2 und eine Anlegeposition des Schiffes 1 in der Anlegestelle 2 in dem Anlagebereich bestimmt. Die Anlegestelle 2 ist hierbei die Stelle, beispielsweise an einem Steg, an welcher das Schiff anlegen soll. Die Anlegeposition ist hierbei die genaue Position und Orientierung des Schiffes 2 in der Anlegestelle.

Insbesondere kann vorgesehen sein, dass die Anlegestelle 2 und die Anlegeposition des Schiffes 1 anhand der Ist-Karte bestimmt wird. Dadurch ergibt sich der Vorteil, dass das Schiff 1 selbsttätig ohne zusätzliche Eingaben durch den Bootsführer anlegen kann.

Weiters kann vorgesehen sein, dass eine Mehrzahl möglicher Anlegestellen 2 bestimmt wird, und dass der Bootsführer die Anlegestelle 2 auswählt.

Insbesondere kann vorgesehen sein, dass der Anlegeplatz 2 von der Leitstelle für die Hafenanlage 5 vorgegeben wird.

In dem Trajektorienplanungsschritt wird die Soll-Trajektorie 3 von der Ist-Position des Schiffes 1, also der derzeitigen Position des Schiffes, zu der Anlegeposition des Schiffes 1 bestimmt. Die Bestimmung der Soll-Trajektorie 3 kann insbesondere unter Berücksichtigung der möglichen Störgrößen und Unsicherheiten wie Strömungen 10, Bewegung anderer Boote und dergleichen erfolgen.

Besonders bevorzugt kann vorgesehen sein, dass aus Witterungsdaten die Störgrößen für den Trajektorienplanungsschritt prognostiziert werden. Diese Witterungsdaten können insbesondere Informationen über Windverhältnisse, Strömungen 10 und/oder Seegang umfassen. Die Witterungsdaten können durch Umweltsensoren des Schiffes 1 bestimmt werden, oder von einem Wetterdienst per Funk bereitgestellt werden. Hierbei kann beispielsweise bei ruhiger See die zu erwartende Störgröße kleiner prognostiziert werden als bei hohem Wellengang.

Insbesondere kann vorgesehen sein, dass die Soll-Trajektorie 3 anhand der Ist-Karte durch den Bootsführer über ein Benutzerinterface vorgegeben werden kann. Das Benutzerinterface kann beispielsweise ein Computerbenutzerinterface sein, insbesondere ein Touchscreen, eine Maus oder ähnliches.

Die Bestimmung der Soll-Trajektorie 3 kann weiters über stochastische Simulationen bestimmt werden. Hierbei kann die Trajektorienplanung mit inkrementellen Schritten erfolgen.

Besonders bevorzugt kann vorgesehen sein, dass in dem Trajektorienplanungsschritt eine Vielzahl an vorläufigen Trajektorien von der Ist-Position des Schiffes 1 zu der Anlegeposition des Schiffes 1 erstellt werden, dass die vorläufigen Trajektorien nach wenigstens einem Bewertungskriterium bewertet und darauf basierend ein Gütewert zugeordnet werden, und dass die vorläufige Trajektorie mit dem besten Gütewert als Soll-Trajektorie 3 für den Trajektorienverfolgungsschritt ausgewählt wird. Hierbei kann eine Trajektorienschar erstellt werden, welche eine Vielzahl an vorläufigen Trajektorien darstellt. Hierbei hat sich gezeigt, dass ein derartiges Verfahren für den Trajektorienplanungsschritt besonders gut geeignet ist, da bei Schiffen im Gegensatz zu Landfahrzeugen eine viel größere Variation an Trajektorien bestehen, da Schiffe 1 nicht die engen Vorgaben der Trajektorien wie Landfahrzeuge aufweisen. Weiters kann bei einem Schiff 1 im Gegensatz zu einem Landfahrzeuge eine viel größere Abweichungen beim Folgen der Trajektorie passieren, da das Schiff 1 im Gegensatz zu einem Landfahrzeug nicht den Bezug zu einer festen Oberfläche hat, und daher Bremsmanöver wesentlich länger dauern, oder das Schiff 1 von einer Strömung oder Bö vom Kurs abgebracht werden kann.

Insbesondere kann vorgesehen sein, dass das wenigstens eine Bewertungskriterium eine Kollisionswahrscheinlichkeit des Schiffes 1 mit anderen Objekten der Ist-Karte umfasst. Die Kollisionswahrscheinlichkeit ist hierbei die Wahrscheinlichkeit einer Kollision des Schiffes 1 mit einem anderen Objekt der Ist-Karte bei einer gegebenen vorläufigen Trajektorie. Durch die Kollisionswahrscheinlichkeit kann ein Bewertungskriterium vorgegeben werden, mit welchem einfach die sicherste Trajektorie für das Schiff errechnet werden kann.

Zum Berechnen der Kollisionswahrscheinlichkeit können insbesondere die Störgrößen aus den Witterungsdaten verwendet werden. Hierbei können die Störgrößen aus den Witterungsdaten verwendet werden, um einen witterungsbedingten Unsicherheitsbereich um das Schiff 1 zu berechnen, wobei der Unsicherheitsbereich jene unvorgesehene Abweichung von der Trajektorie bestimmt, welche durch äußere Einflüsse erfolgt.

Zum Berechnen der Kollisionswahrscheinlichkeit kann weiters ein prognostizierter Bewegungsbereich von bewegten Objekten der Ist-Karte berechnet werden. Der prognostizierte Bewegungsbereich ist hierbei die Summe der prognostizierten Bewegungsmöglichkeiten der bewegten Objekte, wodurch auch mögliche Kursänderung eines derartigen bewegten Objektes für die Kollisionswahrscheinlichkeit berücksichtigt werden können.

Das wenigstens eine Bewertungskriterium kann weiters insbesondere den Mindestabstand des Schiffes 1 zu anderen Objekten der Ist-Karte umfassen. Der Mindestabstand kann insbesondere durch die prognostizierte Störgröße vorgegeben sein.

Weiters kann das wenigstens eine Bewertungskriterium die Länge der Trajektorie oder die Dauer der Abfahrt dieser Trajektorie umfassen.

Weiters kann das wenigstens eine Bewertungskriterium Vorgaben von der Leitstelle der Hafenanlage 5 umfassen. Dies können vorzugsweise gesetzliche Bestimmungen sein, welche in der Hafenanlage 5 gelten.

Das wenigstens eine Bewertungskriterium kann insbesondere Zielvorgaben der Leitstelle der Hafenanlage 5 umfassen.

Besonders bevorzugt kann vorgesehen sein, dass von der Leitstelle der Hafenanlage 5 die Soll-Trajektorien unterschiedlicher Schiffe 1 miteinander koordiniert werden. Dadurch kann die Leitstelle als übergeordnete Hierarchieebene in einem Regelsystem fungieren, welches die Anlegemanöver mehrere Schiffe 1 miteinander koordinieren kann.

Weiters kann vorgesehen sein, dass die Leitstelle der Hafenanlage 5 als ein Bewertungskriterium einen Bewegungskorridor für das Schiff 1 vorgibt, und dass die Soll-Trajektorie im Bewegungskorridor verlaufen soll.

Zur Berechnen des Gütewertes können verschiede Bewertungskriterien verwendet werden, insbesondere nach einer vorgegebenen Gewichtung.

Insbesondere kann vorgesehen sein, dass die Wahl oder Gewichtung der Bewertungskriterien veränderbar ist. Hierbei kann vorgesehen sein, dass bei stürmischer See oder starkem Verkehr im Hafen im Wesentlichen hauptsächlich die Kollisionswahrscheinlichkeit als Bewertungskriterium berücksichtigt wird, während bei ruhiger See oder geringem Verkehr im Hafen die Kollisionswahrscheinlichkeit als Bewertungskriterium weniger stark berücksichtigt wird.

Am Ende wird die am besten bewertete vorläufige Trajektorie als Soll-Trajektorie 3 gewählt.

Weiters kann vorgesehen sein, dass die Soll-Trajektorie 3 der Leitstelle der Hafenanlage 5 übermittelt wird, und von der Leitstelle bestätigt wird.

Weiters kann vorgesehen sein, dass bei dem Trajektorienplanungsschritt die vorläufigen Trajektorien zu unterschiedlichen Anlegestellen 2 und den dazugehörigen Anlegepositionen bestimmt wird, und dass die Anlagestelle 2 basierend auf die dazugehörige Soll-Trajektorie 3 bestimmt wird. Vorzugsweise kann die Anlagestelle 2 nach der bestbewerteten Soll-Trajektorie 3 ausgewählt werden.

Weiters kann vorgesehen sein, dass die unterschiedlichen Anlegestellen 2 mit den dazugehörigen Soll-Trajektorien dem Bootsführer angezeigt werden, und dass der Bootsführer eine Anlegestelle 2 auswählt.

Der Anlegepositionbestimmungsschritt und Trajektorienplanungsschritt können hierbei im Wesentlichen gemeinsam ablaufen.

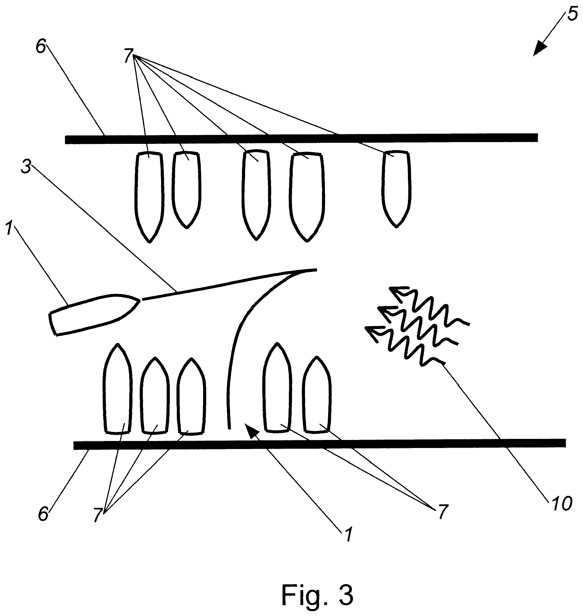

Fig. 3 zeigt schematisch eine in der Ist-Karte eingezeichnete Soll-Trajektorie 3 für ein Schiff 1 in einer Hafenanlage 5. Hierbei umfasst die Ist-Karte festen Bauten 6, andere Schiffe 7 und eine Strömung 10. Anhand dieser Ist-Karte wird eine Anlegestelle 2 ausgewählt, und eine Soll-Trajektorie 3 bestimmt, welche von der Ist-Position in die Anlegeposition führt.

In dem Trajektorienverfolgungsschritt wird das Schiff 1 entlang der Soll-Trajektorie 3 in Richtung der Anlegeposition gesteuert. Hierbei steuert die Regeleinheit, insbesondere das Regelungsmodul der Regeleinheit über die Steuereinheit die diversen Antriebe und Ruder des Schiffes 1.

Hierbei kann insbesondere die Ist-Position des Schiffes laufend überwacht werden, beispielsweise mittels einem GPS, insbesondere einem Differenzial-GPS, und bei einer festgestellten Abweichung von der Soll-Trajektorie 3 das Schiff 1 wieder zur Soll-Trajektorie 3 zurück gesteuert werden.

Besonders bevorzugt kann vorgesehen sein, dass bei dem Trajektorienverfolgungsschritt ein Umfeld des Schiffes 1 mittels Umfeldsensoren 4 überwacht wird. Dadurch kann das Schiff 1 zuverlässig zu der Anlegeposition gesteuert werden.

Besonders bevorzugt kann vorgesehen sein, dass bei dem Trajektorienverfolgungsschritt die Ist-Karte wiederholend aktualisiert wird. Diese Aktualisierung kann insbesondere in regelmäßigen Abständen erfolgen. Dadurch kann schnell auf eine geänderte Situation reagiert werden.

Die Umsetzung der Soll-Trajektorie 3 erfolgt insbesondere im Regelungsmodul, welches die Ausführung unter Berücksichtigung der tatsächlichen Umgebungssituation auf Basis der gemessenen Umfelddaten erfolgt. Um eine robuste Regelung zu bewerkstelligen können insbesondere Strömungen 10, Winde, umliegende bewegte und unbewegte andere Schiffe 7, die Hafen-Geometrie, Zustand des Schiffes 1, insbesondere der Ruder und der Antriebe berücksichtigt werden.

Besonders bevorzugt kann vorgesehen sein, dass bei einer Feststellung eines Hindernisses in der Soll-Trajektorie 3 im Trajektorienverfolgungsschritt der Trajektorienplanungsschritt erneut durchgeführt wird. Der Trajektorienverfolgungsschritt und der Trajektorienplanungsschritt kann hierbei insbesondere iterativ erfolgen, wobei die Soll-Trajektorie 3 gefolgt werden kann, bis ein Hindernis festgestellt werden kann. Die Erfassung des Hindernisses kann hierbei insbesondere durch die Umfeldsensoren 4 erfolgen.

## Patentansprüche

1. Verfahren zum motorenbetriebenen Anlegen mit einem Schiff (1), insbesondere einer Jacht, an einer Anlegestelle (2) in einem Anlegebereich, wobei in einem Kartenerstellungsschritt eine Ist-Karte einer Umgebung des Anlegebereiches erstellt wird, wobei in einem Anlegepositionbestimmungsschritt die Anlegestelle (2) und eine Anlegeposition des Schiffes (1) in der Anlegestelle (2) in dem Anlagebereich bestimmt wird, wobei in einem Trajektorienplanungsschritt eine Vielzahl an vorläufigen Trajektorien von der Ist-Position des Schiffes (1) zu der Anlegeposition des Schiffes (1) erstellt werden, wobei die vorläufigen Trajektorien nach wenigstens einem Bewertungskriterium bewertet und darauf basierend ein Gütewert zugeordnet werden, wobei die vorläufige Trajektorie mit dem besten Gütewert als eine Soll-Trajektorie (3) für einen Trajektorienverfolgungsschritt ausgewählt wird, wobei in dem Trajektorienverfolgungsschritt das Schiff (1) entlang der Soll-Trajektorie (3) in Richtung der Anlegeposition gesteuert wird.

2. Verfahren nach Anspruch 1, **dadurch gekennzeichnet, dass** das wenigstens eine Bewertungskriterium eine Kollisionswahrscheinlichkeit des Schiffes (1) mit anderen Objekten der Ist-Karte umfasst.

3. Verfahren nach Anspruch 1 oder 2, **dadurch gekennzeichnet, dass** für den Kartenerstellungsschritt Sensordaten von Umfeldsensoren (4) des Schiffes (1) für die Erstellung der Ist-Karte verwendet werden,

4. Verfahren nach einem der Ansprüche 1 bis 3, **dadurch gekennzeichnet, dass** der Anlegebereich eine Hafenanlage (5) ist, und dass für den Kartenerstellungsschritt von einer Leitstelle für die Hafenanlage (5) gesendete erste Daten für die Erstellung der Ist-Karte verwendet werden.

5. Verfahren nach Anspruch 4, **dadurch gekennzeichnet, dass** die ersten Daten Koordinatenpunkte von festen Bauten (6) der Hafenanlage (5) umfassen.

6. Verfahren nach Anspruch 4 oder 5, **dadurch gekennzeichnet, dass** die ersten Daten einen Belegungsplan der Hafenanlage (5) mit anderen Schiffen (7) umfassen.

7. Verfahren nach einem der Ansprüche 1 bis 6, **dadurch gekennzeichnet, dass** die Anlegestelle (2) und die Anlegeposition des Schiffes (1) anhand der Ist-Karte bestimmt wird.

8. Verfahren nach einem der Ansprüche 1 bis 7, **dadurch gekennzeichnet, dass** bei dem Trajektorlenverfotgungsschritt die Ist-Karte wiederholend aktualisiert wird.

9. Verfahren nach einem der Ansprüche 1 bis 8, **dadurch gekennzeichnet, dass** bei dem Trajektorienverfolgungsschritt ein Umfeld des Schiffes (1) mittels Umfeldsensoren (4) überwacht wird.

10. Verfahren nach einem der Ansprüche 1 bis 9, **dadurch gekennzeichnet, dass** bei einer Feststellung eines Hindernisses in der Soll-Trajektorie (3) im Trajektorienverfolgungsschritt der Trajektorienplanungsschritt erneut durchgeführt wird.

11. Schiff (1), insbesondere Jacht, umfassend eine Steuervorrichtung zum Bewegen des Schiffes (1), wobei das Schiff (1) Umfeldsensoren (4) und eine mit den Umfeldsensoren (4) verbundene Regeleinheit umfasst, wobei die Regeleinheit mit den Steuervorrichtung verbunden ist um das Schiff (1) vorgebbar zu bewegen, **dadurch gekennzeichnet, dass** die Regeleinheit ausgebildet ist eine Ist-Karte einer Umgebung eines Anlegebereiches zu erstellen, eine Anlegestelle (2) und eine Anlegeposition des Schiffes (1) in der Anlegestelle (2) auszuwählen, eine Vielzahl an vorläufigen Trajektorien von der Ist-Position des Schiffes (1) zu der Anlegeposition des Schiffes (1) zu erstellen, die vorläufigen Trajektorien nach wenigstens einem Bewertungskriterium zu bewerten und darauf basierend ein Gütewert zuzuordnen, und die vorläufige Trajektorie mit dem besten Gütewert als Soll-Trajektorie (3) auszuwählen, und das Schiff (1) durch Betätigung der Steuervorrichtung bei Überwachung eines Umfeldes des Schiffes (1) durch die Umfeldsensoren (4) entlang der Soll-Trajektorie (3) in Richtung der Anlegeposition zu steuern.

12. Schiff (1) nach Anspruch 11, **dadurch gekennzeichnet, dass** die Regeleinheit ein Machine-Learning-Modell, ein datengetriebenes Modell und/oder ein beispielbasiertes Modell umfasst.

## Claims

1. Method for motor-driven mooring with a ship (1), in particular a yacht, at a mooring point (2) in a mooring region, wherein an actual map of an environment of the mooring region is produced in a map generation step, wherein in a mooring position determining step the mooring point (2) and a mooring position of the ship (1) in the mooring point (2) are determined in the mooring region, wherein in a trajectory planning step a plurality of preliminary trajectories are created from the actual position of the ship (1) to the mooring position of the ship (1), wherein the preliminary trajectories are evaluated according to at least one evaluation criterion and a quality value is assigned based thereon, wherein the preliminary trajectory with the best quality value is selected as a target trajectory (3) for a trajectory tracking step, wherein in the trajectory tracking step the ship (1) is steered along the target trajectory (3) in the direction of the mooring position.

2. Method 2 according to claim 1, **characterized in that** the at least one evaluation criterion comprises a collision probability of the ship (1) with other objects of the actual map.

3. Method according to claim 1 or 2, **characterized in that** sensor data from environmental sensors (4) of the ship (1) are used for the map generation step for the generation of the actual map.

4. Method according to one of claims 1 to 3, **characterized in that** the mooring region is a port facility (5), and that first data sent from a port facility control center (5) are used for the map generation step to generate the actual map.

5. Method according to claim 4, **characterized in that** the first data comprise coordinate points of fixed structures (6) of the port facility (5).

6. Method according to claim 4 or 5, **characterized in that** the first data comprise an occupation plan of the port facility (5) with other ships (7).

7. Method according to one of claims 1 to 6, **characterized in that** the mooring point (2) and the mooring position of the ship (1) are determined on the basis of the actual map.

8. Method according to one of claims 1 to 7, **characterized in that** in the trajectory tracking step, the actual map is repeatedly updated.

9. Method according to one of claims 1 to 8, **characterized in that,** in the trajectory tracking step, an environment of the ship (1) is monitored by means of environmental sensors (4).

10. Method according to one of claims 1 to 9, **characterized in that,** if an obstacle is detected in the target trajectory (3) in the trajectory tracking step, the trajectory planning step is carried out again.

11. Ship (1), in particular a yacht, comprising a steering device for moving the ship (1), wherein the ship (1) comprises environmental sensors (4) and a regulating unit connected to the environmental sensors (4), wherein the regulating unit is connected to the steering device in order to move the ship (1) in a predeterminable manner, **characterized in that** the regulating unit is designed to produce an actual map of an environment of a mooring region, to select a mooring point (2) and a mooring position of the ship (1) in the mooring point (2), to produce a plurality of provisional trajectories from the actual position of the ship (1) to the mooring position of the ship (1), to evaluate the provisional trajectories according to at least one evaluation criterion and to assign a quality value based thereon, and to select the provisional trajectory with the best quality value as the target trajectory (3), and to steer the ship (1) along the target trajectory (3) in the direction of the mooring position by actuating the steering device with monitoring an environment of the ship (1) by the environmental sensors (4).

12. Ship (1) according to claim 11, **characterized in that** the regulating unit comprises a machine-learning model, a data-driven model and/or an example-based model.

## Revendications

1. Procédé pour l'accostage au moteur d'un navire (1), en particulier un yacht, à un emplacement d'accostage (2) dans une zone d'accostage, dans lequel, dans une étape de création de carte, une carte réelle d'un environnement de la zone d'accostage est créée, dans lequel, dans une étape de détermination de la position d'accostage, l'emplacement d'accostage (2) et une position d'accostage du navire (1) dans l'emplacement d'accostage (2) dans la zone d'accostage sont déterminés, dans lequel, dans une étape de détermination de trajectoire, plusieurs trajectoires provisoires sont créées entre la position réelle du navire (1) et la position d'accostage du navire (1), dans lequel les trajectoires provisoires sont évaluées sur la base d'au moins un critère d'évaluation et une valeur de qualité leur est attribuée sur cette base, dans lequel la trajectoire provisoire ayant la meilleure valeur de qualité est choisie comme trajectoire de consigne (3) pour une étape de poursuite de trajectoire, dans lequel, dans l'étape de poursuite de trajectoire, le navire (1) est dirigé sur la trajectoire de consigne (3) en direction de la position d'accostage.

2. Procédé selon la revendication 1, **caractérisé en ce que** l'au moins un critère d'évaluation comprend une probabilité de collision du navire (1) avec d'autres objets de la carte réelle.

3. Procédé selon la revendication 1 ou 2, **caractérisé en ce que** pour l'étape de création de carte, des données de capteur d'environnement (4) du navire (1) sont utilisées pour créer la carte réelle.

4. Procédé selon l'une des revendications 1 à 3, **caractérisé en ce que** la zone d'accostage est une installation portuaire (5) et **en ce que** des premières données transmises par une centre de contrôle de l'installation portuaire (5) sont utilisées pour l'étape de création de carte pour créer la carte réelle.

5. Procédé selon la revendication 4, **caractérisé en ce que** les premières données comprennent des coordonnées de constructions fixes (6) de l'installation portuaire (5).

6. Procédé selon la revendication 4 ou 5, **caractérisé en ce que** les premières données comprennent un plan d'occupation de l'installation portuaire (5) par d'autres navires (7).

7. Procédé selon l'une des revendications 1 à 6, **caractérisé en ce que** l'emplacement d'accostage (2) et la position d'accostage du navire (1) sont déterminés à l'aide de la carte réelle.

8. Procédé selon l'une des revendications 1 à 7, **caractérisé en ce que** la carte réelle est actualisée de façon itérative pendant l'étape de poursuite de trajectoire.

9. Procédé selon l'une des revendications 1 à 8, **caractérisé en ce qu'**un environnement du navire (1) est surveillé au moyen de capteurs d'environnement (4) pendant l'étape de poursuite de trajectoire.

10. Procédé selon l'une des revendications 1 à 9, **caractérisé en ce que**, lorsqu'un obstacle est observé dans la trajectoire de consigne (3) pendant l'étape de poursuite de trajectoire, l'étape de détermination de trajectoire est à nouveau exécutée.

11. Navire (1), en particulier yacht, comprenant un dispositif de commande pour la manoeuvre du navire (1), lequel navire (1) comprend des capteurs d'environnement (4) et une unité de régulation reliée aux capteurs d'environnement (4), l'unité de régulation pouvant être reliée au dispositif de commande pour manoeuvrer le navire (1) d'une manière pouvant être prédéterminée, **caractérisé en ce que** l'unité de régulation est conçue pour créer une carte réelle d'un environnement d'une zone d'accostage, choisir un emplacement d'accostage (2) et une position d'accostage du navire (1) dans l'emplacement d'accostage (2), créer un grand nombre de trajectoires provisoires de la position réelle du navire (1) à la position d'accostage du navire (1), évaluer les trajectoires provisoires selon au moins un critère d'évaluation et leur attribuer une valeur de qualité sur cette base et choisir la trajectoire provisoire ayant la meilleure valeur de qualité comme trajectoire de consigne (3) pour diriger le navire (1) sur la trajectoire de consigne (3) en direction de la position d'accostage en actionnant le dispositif de commande, tout en surveillant un environnement du navire (1) à l'aide des capteurs d'environnement (4).

12. Navire (1) selon la revendication 11, **caractérisé en ce que** l'unité de régulation comprend un modèle d'apprentissage par la machine, un modèle basé sur les données ou un modèle basé sur des exemples.
